# EUROPÄISCHE PATENTSCHRIFT

(11) **EP 4 209 636 B1**
(45) Veröffentlichungstag und Bekanntmachung des Hinweises auf die Patenterteilung: **24.04.2024**
(21) Anmeldenummer: 22215937.8
(22) Anmeldetag: 22.12.2022
(51) Int. Cl.: E02F 3/20

(54) **BODENFRÄSE ZUM VORBEREITEN VON WALDBÖDEN ZUR BAUMBEPFLANZUNG**
GROUND MILLING CUTTER FOR PREPARING FOREST SOILS FOR TREE PLANTING
FRAISE DE SOL POUR LA PRÉPARATION DE PLANCHERS FORESTIERS POUR LA PLANTATION D'ARBRES

(30) Priorität: 04.01.2022 DE 202022100046 U
(43) Veröffentlichungstag der Anmeldung: 12.07.2023
(73) Patentinhaber: KEMROC Holding GmbH, 36433 Leimbach (DE)
(72) Erfinder: Ertmer, Klaus, 36433 Leimbach (DE)
(74) Vertreter: Engel, Christoph Klaus

(56) Entgegenhaltungen:
- EP-B1- 2 324 158
- DE-A1- 19 811 806
- DE-A1-102005 023 966
- DE-B4-102015 115 543

## Beschreibung

Die Erfindung betrifft eine Bodenfräse zum Vorbereiten von Waldböden zur Baumbepflanzung. Die Bodenfräse umfasst dazu eine an sich bekannten Baggeranbaufräse und kann wie die bekannte Anbaufräse bevorzugt an einen beweglichen Auslegerarm eines Trägergerätes, insbesondere eines Baggers oder einer ähnlichen Maschine angebaut werden.

Insbesondere nach großflächigen Abholzungen von Waldflächen besteht der Bedarf einer schnellen Wiederaufforstung. Aufgrund von Schädlingsbefall und klimatischen Veränderungen hat sich der Bedarf zur Wiederaufforstung in den letzten Jahren drastisch vergrößert, sodass die Forstbetriebe mit herkömmlichen Methoden diese Aufgabe kaum bewältigen können. Ein wesentlicher Bestandteil bei der Wiederaufforstung ist in der Vorbereitung des Waldbodens zu sehen, um Stecklinge einfach einzubringen und vor allem um diesen gute Wachstumsbedingungen zu ermöglichen, wofür die großvolumige Auflockerung des Waldbodens von besonderer Bedeutung ist. Dazu muss der abgeholzte Waldboden, welcher teils schon mit Büschen und Gräsern neu bewachsen ist, in beispielsweise ca. 50 cm breiten und 50 cm tiefen Streifen aufgearbeitet und gelockert werden. Idealerweise sollen dabei die tieferen Bodenschichten an die Oberfläche und die bewachsene obere Schicht nach unten befördert werden.

Aus der EP 2 324 158 B1 ist eine Baggeranbaufräse bekannt, die sich vor allem zum Aufbrechen harter Flächen aus Gestein, Asphalt oder Beton sowie zum Gesteinsabbau eignet.

Die DE 10 2015 115 543 B4 beschreibt eine Streifenfräse mit wenigstens zwei voneinander beabstandeten Hauptfräsen. Die Hauptfräsen dienen der Erzeugung von Fräskanälen und sind auf einer gemeinsamen Achse angeordnet. Außerdem ist wenigstens eine Feinfräsvorrichtung vor oder hinter der Streifenfräse angeordnet. Die Feinfräsvorrichtung besitzt wenigstens ein Fräswerkzeug mit geringerer Frästiefe als die der beiden Hauptfräsen. Die gesamte Vorrichtung ist vergleichsweise groß und schwer und eignet sich daher nur zum Einsatz auf ebenen, gut zugänglichen Flächen. Eine tiefe Bodenlockerung gelingt mit dieser Vorrichtung nicht.

Die DE 10 2005 023 966 A1 beschreibt eine Vorrichtung zur Bearbeitung der Böden für Reihenkulturen. Die Vorrichtung nutzt zur Lockerung des Bodens ein Fräsrohr. Das Fräsrohr kann maximal bis zu seiner Drehachse in den Boden eindringen, sodass entweder nur geringe Bearbeitungstiefen oder aber sehr große Vorrichtungen resultieren. Für einen leichten Aufbau, der dennoch eine Bodenauflockerung bis zu einer Tiefe von ca. 50 cm ermöglichen soll, eignet sich diese Konstruktion daher nicht.

Die DE 198 11 806 A1 zeigt eine an einem Bagger angebrachte Erdfräse. Die Erdfräse umfasst eine eine Mehrzahl von Messern tragende Welle, welche in einem Gehäuse angeordnet ist. Das Gehäuse ist dabei in Richtung des zu bearbeitenden Bodens geöffnet. Die Erdfräse ist an einem Auslegerarm eines motorisch angetriebenen Fahrzeugs befestigt, wobei die Erdfräse mittels eines Hydraulikmotors antreibbar ist. Das Gehäuse weist zwei dem Boden zugewandte seitliche Führungskufen auf. Im praktischen Einsatz zeigt sich jedoch, dass mit dieser Erdfräse die für gute Anwachsbedingungen nötige Lockerung des Bodens nicht bis in die erforderliche Tiefe erreichbar ist.

Die Aufgabe der vorliegenden Erfindung besteht ausgehend vom Stand der Technik darin, eine Bodenfräse zum Anbau an einen beweglichen Auslegerarm eines Trägergerätes, insbesondere eines Baggers, derart weiterzuentwickeln, dass sie für die Vorbereitung von Waldböden zur Baumbepflanzung auch in unwegsamen Gelände einsetzbar ist und die Aufbereitung des Waldbodens bis zu einer Tiefe von ca. 50 cm gestattet.

Erfindungsgemäß wird die Aufgabe durch die Merkmale der Bodenfräse gemäß dem beigefügten Anspruch 1 gelöst.

Die erfindungsgemäße Bodenfräse zum Vorbereiten von Waldböden zur Baumbepflanzung umfasst zunächst eine aus der EP 2 324 158 B1 an sich bekannte Baggeranbaufräse mit einer Anbaukonsole zur Befestigung an einem beweglichen Auslegerarm eines Baggers. Diese Fräse besitzt mindestens einen Motor, zwei rotierend angetriebene Querschneidköpfe und eine angetriebene umlaufende Fräskette mit zahlreichen Fräsmeißeln. Die Querschneidköpfe sind beidseitig zu der Längsachse der Anbaukonsole angebracht. Die umlaufende Fräskette hat eine Laufrichtung, die parallel zur Längsachse der Anbaukonsole verläuft, und erstreckt sich zwischen den beiden Querschneidköpfen. An der Fräskette und den Querschneidköpfen sind jeweils zahlreiche Fräsmeißel angebracht, die bei einer Drehung der Schneidköpfe eine zylindrische Fräsmantelfläche beschreiben. Die Fräsmeißel der Fräskette bilden am freiliegenden vorderen Ende der Fräskette eine halbzylindrische Manteloberfläche. Dabei liegt die vordere Umkehrlinie der Fräskette im Wesentlichen in einer die Fräsmantelflächen der beiden Querschneidköpfe tangierenden Ebene. Die Berührungslinien der Fräsmeißel der Schneidköpfe mit der zu fräsenden Waldbodenoberfläche liegen damit ohne nennenswerte Lücke neben der Berührungslinie der Fräsmeißel der Fräskette. Zweckmäßigerweise liegen diese Berührungslinien auch in einer gemeinsamen Ebene.

Die erfindungsgemäße Bodenfräse umfasst weiterhin ein Bodenleitgehäuse, welches die Anbaukonsole der Baggeranbaufräse wenigstens teilweise umschließt. Das Bodenleitgehäuse dient zunächst der Verhinderung des unkontrollierten Auswurfs des beim Eindringen der Fräse in den Waldboden gelockerten Bodenmaterials, sodass dieses am Ort der späteren Neubepflanzung verbleibt und auch die Gefährdung von umstehenden Personen oder Geräten sicher vermieden wird. Das Bodenleitgehäuse besitzt Befestigungspunkte zur Anbringung an der Anbaukonsole und/oder am Auslegerarm des Baggers. Weiterhin ist eine Deckelplatte vorgesehen, welche das Bodenleitgehäuse angrenzend an die Anbaukonsole nach oben verschließt. Ausgehend von der Deckelplatte erstreckt sich im Wesentlichen parallel zur Längsachse der Anbaukonsole nach unten ein Gehäusemantel. Der Deckelplatte gegenüberliegend befindet sich eine untere Gehäuseöffnung im Bodenleitgehäuse, welche im Betriebsmodus zum Waldboden gerichtet ist. Der Gehäusemantel weist eine axiale Ausdehnung auf, sodass die beiden Querschneidköpfe im Wesentlichen vollständig und der zwischen diesen verlaufende Abschnitt der Fräskette aus der Gehäuseöffnung herausragen, um in den Waldboden einzudringen.

Das Bodenleitgehäuse erfüllt einen weiteren Zweck, nämlich die Führung der Bodenfräse während der Bearbeitung des Waldbodens. Dazu sind mindestens zwei Gleitkufen vorgesehen, welche in einer Arbeitsrichtung verlaufend an der Gehäuseöffnung angebracht sind und auf dem Waldboden gleiten können. Die Gleitkufen begrenzen die Eindringtiefe der Fräse in den Boden. Gemäß einer bevorzugten Ausführungsform sind die Gleitkufen in Richtung der Längsachse der Anbaukonsole verschiebbar am Bodenleitgehäuse befestigt, sodass sich auf diese Weise die Eindringtiefe der Fräse einstellen lässt.

Das Bodenleitgehäuse erfüllt noch einen weiteren Zweck, nämlich die Positionierung des aufgelockerten Bodens. Dazu ist eine vorzugsweise axial verschiebbare Auswurfplatte als Bestandteil des Bodenleitgehäuses vorgesehen, die einen Abschnitt des Gehäusemantels bildet und zwischen den Gleitkufen eine bevorzugt höhenveränderliche Auswurföffnung freigibt. Je nachdem, wie die Auswurfplatte in Längsrichtung der Anbaukonsole verstellt wird, ergibt sich eine größere oder kleiner Auswurföffnung im Bodenleitgehäuse, die Einfluss auf die Häufel-Höhe des gelockerten Bodens über dem Ausgangsniveau hat. Ist die Häufel-Höhe größer, so verbleibt der Boden in der Arbeitsspur sehr locker; ist die Häufel-Höhe niedriger, so wird der gelockerte Boden durch die Bodenfräse wieder etwas verdichtet, stattdessen ergeben sich weniger Unebenheiten auf dem bearbeiteten Waldboden. Die gewünschte Häufel-Höhe lässt sich auf diese Weise auf die Bodenzusammensetzung und die bevorzugten Bodenbedingungen der zu pflanzenden Bäume anpassen.

Eine vorteilhafte Ausführungsform der Bodenfräse zeichnet sich dadurch aus, dass das Bodenleitgehäuse einen im Wesentlichen rechteckigen Querschnitt besitzt. In der Arbeitsstellung der Bodenfräse gleicht das Bodenleitgehäuse dann einem in Richtung zum Waldboden geöffneten quaderförmigen Behälter. Alternativ kann das Bodenleitgehäuse z. B. eine Becher- oder Zylinderform besitzen, die ebenfalls nach unten zum Waldboden geöffnet sind, um die Querschneidköpfe und den vorderen Abschnitt der Fräskette aus dem Bodenleitgehäuse austreten zu lassen.

Vorzugsweise sind die beiden Gleitkufen aus Stahl gefertigt und verlaufen jeweils über die gesamte Länge der zwei sich in Vorschubrichtung erstreckenden Kanten der Gehäuseöffnung. Alternativ können die Gleitkufen in mehrere Abschnitte unterteilt sein und/oder aus anderen verschleißfesten Materialien gefertigt sein.

Gemäß einer bevorzugten Ausführungsform verlaufen die Gleitkufen über die Enden der sich in Vorschubrichtung erstreckenden Kanten der Gehäuseöffnung hinaus in einem Bogen oder Winkel bis an die angrenzenden Flächen des Gehäusemantels. Dadurch werden die Kanten des Gehäusemantels zusätzlich vor Verschleiß und Beschädigung geschützt.

Bevorzugt treibt der Motor sowohl die Fräskette als auch die Querschneidköpfe an. Der Motor kann ein vom Bagger versorgter Hydraulikmotor oder auch ein Elektromotor sein. Alternativ kann jedem der beiden Querschneidköpfe ein eigener Motor zugeordnet sein.

Die Erfindung betrifft außerdem eine Bodenbearbeitungsmaschine zum Vorbereiten von Waldböden zur Baumbepflanzung. Diese Maschine umfasst einen Bagger mit einem Auslegerarm sowie eine Bodenfräse in einer der zuvor beschriebenen Ausführungsformen, wobei die Bodenfräse am freien Ende des Auslegerarms lösbar angebracht ist.

Durch die erfindungsgemäße Bodenfräse wird ein leichtes Anbaugerät für Bagger oder gleichartige Maschinen bereitgestellt, womit ein völlig neues Einsatzgebiet für derartige Anbaufräsen erschlossen wird. Aufgrund des geringen Gewichtes der Bodenfräse kann ein mittlerer Bagger (ca. 20 - 25 Tonnen) mit einem sogenannten Longfront Ausleger bestückt werden, an welchem die Bodenfräse angeflanscht wird. Die Bodenbearbeitung kann damit in bis zu 12 Meter Entfernung vom Bagger erfolgen, sodass der Bagger nicht ständig umgesetzt werden muss und große Flächen in hoher Geschwindigkeit bearbeitet werden können, um sie insbesondere für die Aufforstung vorzubereiten. Die Bodenfräse kann alternativ auch an adäquaten Forstmaschinen angebaut werden, wenn mit diesen die zu bearbeitenden Flächen besser erreichbar sind.

Die Bodenfräse wird vorzugsweise von einem oder mehreren Hydraulikmotoren angetrieben, welche vom Hydrauliköl des Baggers gespeist werden. Die Motoren treiben bevorzugt die Fräskette an und diese die Querschneidköpfe. Die Kettenumlenkung und das ggf. vorhandene Fräsgetriebe sind vom Bodenleitgehäuse derart umschlossen, dass die Eindringtiefe der Fräse nur durch die Gleitkufen begrenzt ist. Weiterhin wird durch die verschiebbare Auswurfplatte eine Gehäuseöffnung entsprechend der Volumenvergrößerung des aufgelockerten Boden im Bodenleitgehäuse bereitgestellt. Die Schneidköpfe und die Fräskette dringen in den Waldboden ein und führen die Auflockerung durch. Dabei können die Schneidköpfe und/oder die Fräskette mit Spezialmeißeln für Holz, aber auch mit klassischen Rundschaftmeißeln für Gestein bestückt werden. Aufgrund des geringen Durchmessers der Schneidköpfe und der schmalen Bauweise haben diese Bodenfräsen den Vorteil dass sie eine sehr hohe Schneidkraft und ein geringes Gewicht aufweisen. Besonders vorteilhaft ist es, dass die erreichbare Auflockerungstiefe etwa dem Durchmesser der Schneidköpfe entspricht und nicht nur dem halben Durchmesser, wie bei vorbekannten Maschinen.

Die Schneidkraft der Bodenfräse lässt sich ausreichend hoch dimensionieren, sodass auch Wurzeln oder auf der Aufforstungsfläche verbliebene Baumstümpfe gefräst werden können.

Weitere Vorteile und Einzelheiten der Erfindung ergeben sich aus der nachfolgenden Beschreibung einer bevorzugten Ausführungsform, unter Bezugnahme auf die Zeichnung. Es zeigen:
- Fig. 1: eine perspektivische Ansicht einer Ausführungsform einer Baggeranbaufräse gemäß dem Stand der Technik;
- Fig. 2: eine Seitenansicht einer Bodenbearbeitungsmaschine in der Ausführungsform eines Baggers mit einer Bodenfräse;
- Fig. 3: eine Frontansicht der Bodenbearbeitungsmaschine gemäß Fig. 2.

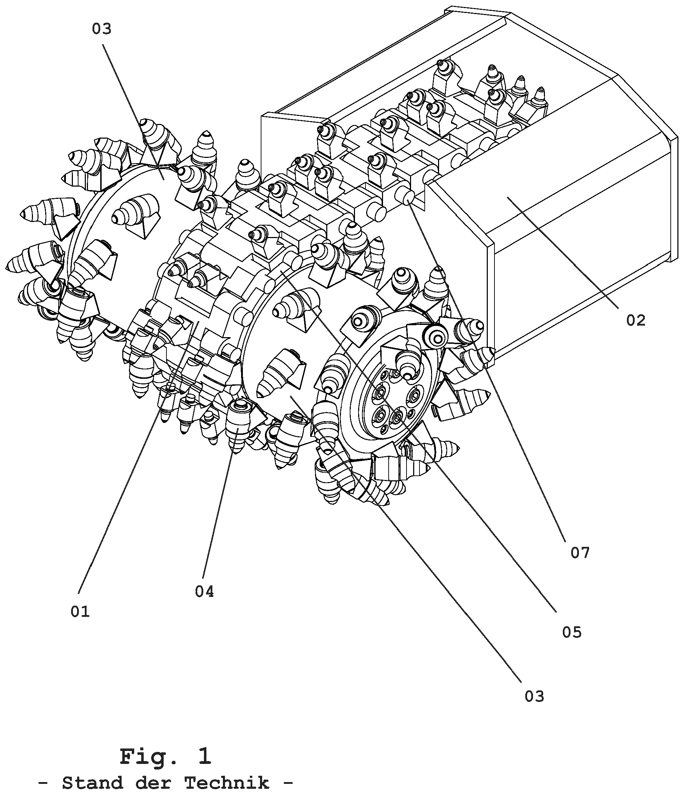

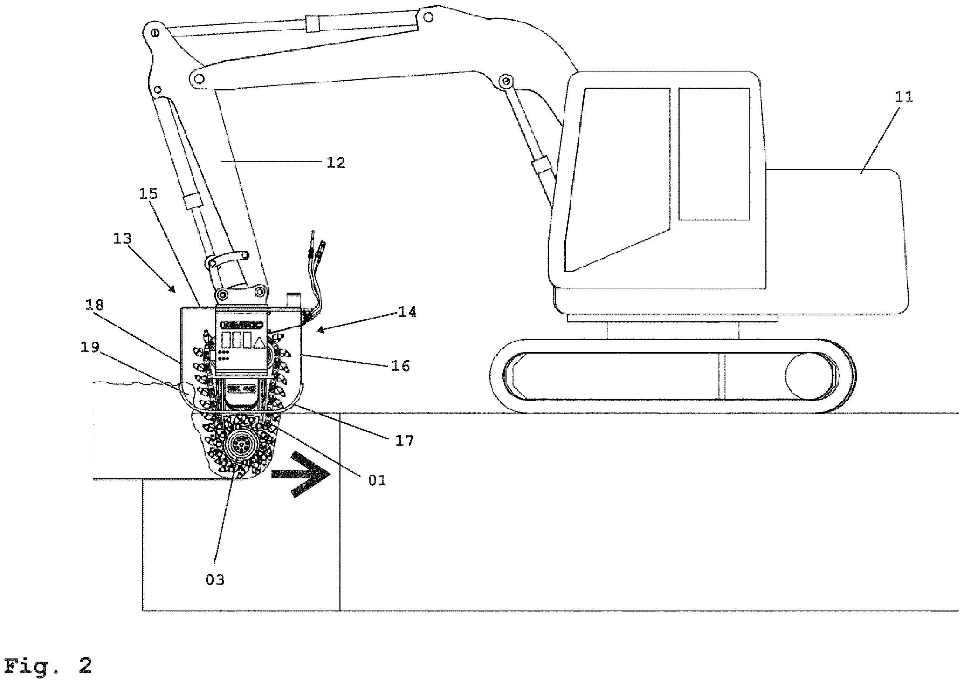

Fig. 1 zeigt eine Ausführungsform einer aus dem Stand der Technik bekannten Baggeranbaufräse, wie sie bei der erfindungsgemäßen Bodenfräse Verwendung findet. Die Baggeranbaufräse umfasst eine Fräskette 01 und zwei rotierende Querschneidköpfe 03, die an einer Anbaukonsole 02 angebracht sind. Die Anbaukonsole wird in an sich bekannter Weise an den Auslegerarm eines Trägergerätes, insbesondere eines Baggers (siehe Fig. 2) angeflanscht. Die Querschneidköpfe 03 sind an beiden Seiten der Anbaukonsole 02, bezogen auf deren Längsachse, befestigt. Die Fräskette 01 befindet sich zwischen den beiden rotierenden Querschneidköpfen 03 und verläuft parallel zur Längsachse der Anbaukonsole 02.

An jedem der beiden Schneidköpfe 03 und an der Fräskette 01 sind Fräsmeißel 04 angebracht, beispielsweise hartmetallbestückte Rundschaftmeißel, wobei diese auch mit anderen Schneidwerkzeugen bestückt sein können. Während der Drehbewegung der Schneidköpfe 03 um ihre Drehachse wird von den Fräsmeißeln 04 eine zylindrische Fräsmanteloberfläche beschrieben. Die Fräsmeißel 04 auf der Fräskette 01 sind in Laufrichtung verteilt, dabei beschreiben sie im Betrieb am freiliegenden vorderen Ende der Fräskette 01 eine halbzylindrische Fräsmanteloberfläche. Damit liegt die vordere Umkehrlinie der Fräskette 01 im Wesentlichen in einer Ebene mit der Ebene, die durch die Fräsmanteloberflächen der beiden Schneidköpfe 03 definiert wird. Die Querschneidköpfe 03 und die Fräskette 01 bilden somit gemeinsam ein walzenähnliches Fräswerkzeug.

Bei der dargestellten Ausführungsform der Baggeranbaufräse erfolgt der Antrieb der Fräskette 01 über einen Motor, vorzugsweise einen Hydraulikmotor, der ohne Untersetzungsgetriebe an die Fräskette 01 gekoppelt ist. Der Motor ist zwischen den beiden Schneidköpfen 03 angeordnet und wird von der Fräskette 01 umlaufen. Sowohl die Fräskette 01 als auch die Schneidköpfe 03 werden von dem langsam laufenden Motor angetrieben. Andere Ausführungsformen sind möglich, beispielsweise unter Verwendung eines Getriebes und/oder mehrerer Motoren.

Die Querschneidköpfe 03 können mit Mitnehmerritzeln 05 lösbar verbunden sein, wodurch die Schneidköpfe 03 von der Anbaukonsole 02 abnehmbar sind, ohne dass der Antrieb der Fräskette 01 beeinträchtigt wird. Die Umlenkung der Fräskette 01 wird z. B. mittels einer in der Figur nicht sichtbaren Umlenkrolle realisiert.

Fig. 2 zeigt eine Bodenbearbeitungsmaschine 11 in der Form eines Baggers, der einen Auslegerarm 12 umfasst. Am freien Ende des Auslegers 12 ist eine Bodenfräse 13 angebracht, die als eine Hauptkomponente die oben beschriebene Baggeranbaufräse enthält. Die zweite Hauptkomponente der Bodenfräse 13 ist durch ein Bodenleitgehäuse 14 gebildet, welches in Fig. 2 in geschnittener Darstellung gezeigt ist, um die teilweise im Bodenleitgehäuse liegende Baggeranbaufräse sichtbar werden zu lassen.

Das Bodenleitgehäuse 14 besitzt eine oben liegende Deckelplatte 15, welche das Austreten von aufgeworfenem Boden nach oben verhindert und damit auch die Gelenkstellen am Ausleger 12 schützt. Weiterhin besitzt das Bodenleitgehäuse 14 einen Gehäusemantel 16, der sich von der Deckelplatte nach unten erstreckt. Das Bodenleitgehäuse ist an seiner Unterseite geöffnet. Durch die dort gebildete Gehäuseöffnung treten der vordere Teil der Fräskette 01 sowie die Querschneidköpfe 03 heraus, sodass diese in den Waldboden eingreifen und diesen auflockern können.

Im Bereich der Gehäuseöffnung sind Gleitkufen 17 an der Unterkante des Gehäusemantels 16 angebracht. Bei einer durch einen Bewegungspfeil symbolisierten Vorschubbewegung (auf den Bagger hin gerichtet) gleitet die Bodenfräse auf diesen Gleitkufen 17, sodass das zu tiefe Eindringen in den Boden vermieden wird.

An der bezogen auf die Vorschubbewegung hinten liegenden Seite des Bodenleitgehäuses 14 befindet sich eine Auswurfplatte 18, die parallel zur Längsachse der Anbaukonsole liegt und in Achsrichtung verschiebbar ist. Damit ist die lichte Weite einer Auswurföffnung 19 einstellbar, aus welcher der aufgelockerte Boden austreten kann.

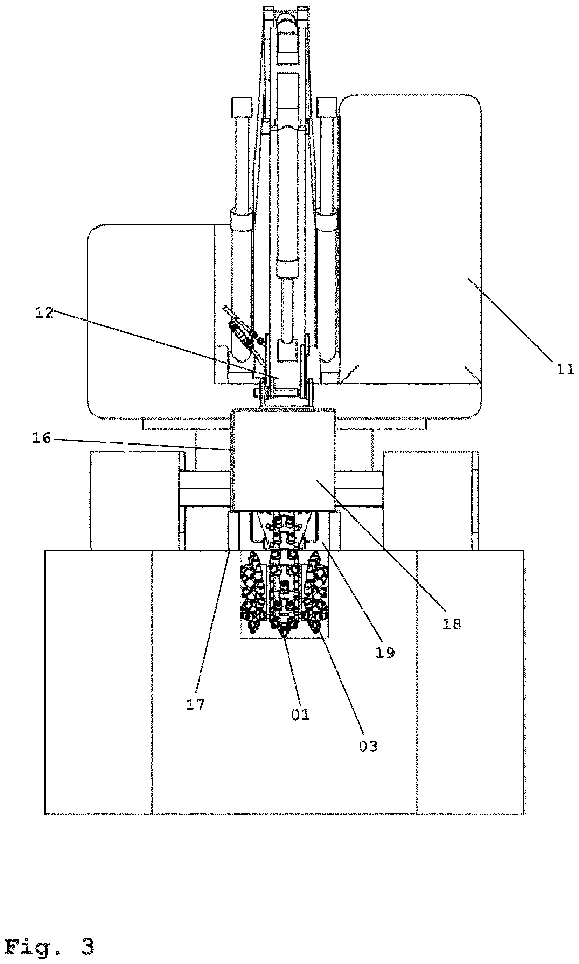

Fig. 3 zeigt die Bodenbearbeitungsmaschine 11 in einer Frontansicht. Hier ist gut erkennbar, dass Fräskette 01 und Querschneidköpfe 03 tief in den Boden eingedrungen sind, beispielsweise 50-60 cm tief, was etwa dem Durchmesser der Querschneidköpfe 03 entspricht. Die Gleitkufen 17 stehen auf dem ungelockerten Boden auf. Die Auswurfplatte 18 ist nach oben verschoben, sodass die lichte Weite der Auswurföffnung ca. 30 cm beträgt. Der Gehäusemantel 16 schirmt im Übrigen die Fräse allseits ab, sodass der gelockerte Boden nur aus der Austrittsöffnung 19 hervortreten kann.

### Bezugszeichenliste

- 01: Fräskette
- 02: Anbaukonsole
- 03: Schneidkopf
- 04: Fräsmeißel
- 05: Mitnehmerritzel
- 07: Mitnehmerstift
- 09: Getriebegehäuse
- 10: --
- 11: Bodenbearbeitungsmaschine / Bagger
- 12: Auslegerarm
- 13: Bodenfräse
- 14: Bodenleitgehäuse
- 15: Deckelplatte
- 16: Gehäusemantel
- 17: Gleitkufen
- 18: Auswurfplatte
- 19: Auswurföffnung

## Patentansprüche

1. Bodenfräse (13) zum Vorbereiten von Waldböden zur Baumbepflanzung, umfassend:
• eine Baggeranbaufräse mit
- einer Anbaukonsole (02) zur Befestigung an einem beweglichen Auslegerarm (12) eines Baggers (11),
- einem Motor,
- zwei rotierend angetriebenen Querschneidköpfen (03), die beidseitig der Längsachse der Anbaukonsole (02) angebracht sind und zahlreiche Fräsmeißel (04) tragen, wobei die Fräsmeißel (04) jedes Querschneidkopfes (03) bei dessen Drehung eine zylindrische Fräsmantelfläche beschreiben,
- einer angetriebenen umlaufenden Fräskette (01) mit weiteren Fräsmeißeln (04), deren Laufrichtung parallel zur Längsachse der Anbaukonsole (02) verläuft und die sich zwischen den beiden Querschneidköpfen (03) erstreckt, wobei eine vordere Umkehrlinie der Fräskette (01) im Wesentlichen in einer die Fräsmantelflächen der beiden Querschneidköpfe (03) tangierenden Ebene liegt;
**gekennzeichnet durch**
• ein Bodenleitgehäuse (14), welches die Anbaukonsole (02) der Baggeranbaufräse wenigstens teilweise umgreift, mit
- Befestigungspunkten zur Anbringung an der Anbaukonsole (02) und/oder am Auslegerarm (12),
- einer Deckelplatte (15), welche das Bodenleitgehäuse (14) nach oben verschließt,
- einem sich ausgehend von der Deckelplatte (15) im Wesentlichen parallel zur Längsachse der Anbaukonsole (02) nach unten erstreckenden Gehäusemantel (16),
- einer der Deckelplatte (15) gegenüberliegenden unteren Gehäuseöffnung, wobei der Gehäusemantel eine axiale Ausdehnung besitzt, sodass die beiden Querschneidköpfe (03) im Wesentlichen vollständig und der zwischen diesen verlaufende Abschnitt der Fräskette aus der Gehäuseöffnung herausragen,
- zwei Gleitkufen (17), welche in einer Vorschubrichtung verlaufend an der Gehäuseöffnung angebracht sind und auf dem Waldboden gleiten können,
- einer Auswurfplatte (18), die einen Abschnitt des Gehäusemantels (16) bildet und zwischen den Gleitkufen (17) eine Auswurföffnung (19) freigibt.

2. Bodenfräse (13) nach Anspruch 1, **dadurch gekennzeichnet, dass** das Bodenleitgehäuse (14) einen im Wesentlichen rechteckigen Querschnitt aufweist und in der Arbeitsstellung der Bodenfräse einem in Richtung zum Waldboden geöffneten quaderförmigen Behälter gleicht.

3. Bodenfräse (13) nach Anspruch 2, **dadurch gekennzeichnet, dass** die beiden Gleitkufen (17) aus Stahl gefertigt sind und jeweils über die gesamte Länge der zwei sich in Vorschubrichtung erstreckenden Kanten der unteren Gehäuseöffnung verlaufen.

4. Bodenfräse (13) nach Anspruch 3, **dadurch gekennzeichnet, dass** die Gleitkufen (17) über die Enden der sich in Vorschubrichtung erstreckenden Kanten der unteren Gehäuseöffnung hinaus bis an die angrenzenden Flächen des Gehäusemantels (16) verlaufen.

5. Bodenfräse (13) nach einem der Ansprüche 1 bis 4, **dadurch gekennzeichnet, dass** die Gleitkufen (17) in Richtung der Längsachse der Anbaukonsole (02) verschiebbar am Bodenleitgehäuse (14) befestigt sind.

6. Bodenfräse (13) nach einem der Ansprüche 1 bis 5, **dadurch gekennzeichnet, dass** die Auswurfplatte (18) an der in Vorschubrichtung hinteren Seitenfläche des Gehäusemantels (16) angeordnet ist und axial verschiebbar am Gehäusemantel (16) angebracht ist, um die lichte Weite der Auswurföffnung (19) einstellen zu können.

7. Bodenfräse (13) nach einem der Ansprüche 1 bis 6, **dadurch gekennzeichnet, dass** der die Fräskette (01) antreibende Motor (11) auch die Querschneidköpfe (03) mittelbar antreibt.

8. Bodenfräse (13) nach einem der Ansprüche 1 bis 7, **dadurch gekennzeichnet, dass** der Motor ein vom Bagger (11) versorgbarer Hydraulikmotor oder ein Elektromotor ist.

9. Bodenfräse (13) nach einem der Ansprüche 1 bis 8, **dadurch gekennzeichnet, dass** die Fräsmeißel (04) der Fräskette (01) an einem freiliegenden vorderen Ende eine halbzylindrische Mantelfläche beschreiben, die im Wesentlichen in einer gemeinsamen gekrümmten Fläche mit vorderen Abschnitten der zylindrischen Fräsmantelflächen der Querschneidköpfe (03) liegt.

10. Bodenfräse (13) nach einem der Ansprüche 1 bis 9, **dadurch gekennzeichnet, dass** der Antrieb der Fräskette (01) durch zwei Mitnehmerritzel (05) erfolgt, welche zwischen dieser und den Querschneidköpfen (03) angeordnet sind und sowohl in Mitnehmerelemente (07) der Fräskette (01) als auch in solche des jeweils angrenzenden Querschneidkopfs (03) eingreifen.

11. Bodenfräse (13) nach Anspruch 10, **dadurch gekennzeichnet, dass** die Fräskette (01) Mitnehmerstifte (07) umfasst, die sich jeweils an ihren den Querschneidköpfen (03) zugewandten Seiten befinden und die Mitnehmerelemente der Fräskette (01) bilden.

12. Bodenfräse (13) nach Anspruch 10 oder 11, **dadurch gekennzeichnet, dass** die Mitnehmerritzel (05) mit den Querschneidköpfen (03) derart lösbar verbunden sind, dass die Querschneidköpfe (03) von der Anbaukonsole (02) abnehmbar sind, ohne den Antrieb der Fräskette (01) zu beeinträchtigen.

13. Bodenfräse (13) nach einem der Ansprüche 1 bis 12, **dadurch gekennzeichnet, dass** der Motor und Getriebeelemente in einem Getriebegehäuse zwischen den beiden Querschneidköpfen (03) angeordnet sind, welcher von der Fräskette (01) umlaufen wird.

14. Bodenfräse (13) nach Anspruch 1, **dadurch gekennzeichnet, dass** jedem der beiden Querschneidköpfe (03) ein eigener Motor (11) zugeordnet ist, welche beide auch die Fräskette (01) antreiben.

15. Bodenbearbeitungsmaschine (11) zum Vorbereiten von Waldböden zur Baumbepflanzung, umfassend einen Bagger (11) mit einem Auslegerarm (12) sowie eine Bodenfräse (13) gemäß einem der Ansprüche 1 bis 14, die am freien Ende des Auslegerarms (12) lösbar angebracht ist.

## Claims

1. Tiller (13) for preparing forest soils for tree planting, comprising:
• an excavator-mounted cutter with
- a mounting bracket (02) for attachment to a moveable boom (12) of an excavator (11),
- an engine,
- two rotationally driven cross-cutting heads (03), which are mounted on both sides of the longitudinal axis of the mounting bracket (02) and carry numerous cutting tools (04), wherein the cutting tools (04) of each cross-cutting head (03) describe a cylindrical cutting surface during its rotation,
- a driven rotating cutting chain (01) with further cutting tools (04), the running direction of which extends parallel to the longitudinal axis of the mounting bracket (02) and which extends between the two cross-cutting heads (03), wherein a front reversal line of the cutting chain (01) lies substantially in a plane tangential to the cutting surfaces of the two cross-cutting heads (03);
**characterized by**
• a ground guide housing (14), which at least partially engages around the mounting bracket (02) of the excavator-mounted cutter, with
- attachment points for attachment to the mounting bracket (02) and/or to the boom (12),
- a cover plate (15), which closes the ground guide housing (14) upwards,
- a housing shell (16) extending downwards from the cover plate (15) substantially parallel to the longitudinal axis of the mounting bracket (02),
- a lower housing opening opposite the cover plate (15), wherein the housing shell has an axial extension such that the two cross-cutting heads (03) protrude substantially completely and the section of the cutting chain extending between them protrudes from the housing opening,
- two runners (17), which are attached to the housing opening in a feed direction and can slide on the forest floor,
- a discharge plate (18), which forms a section of the housing shell (16) and opens a discharge opening (19) between the runners (17) .

2. Tiller (13) according to Claim 1, **characterized in that** the ground guide housing (14) has a substantially rectangular cross-section and, in the working position of the tiller, resembles a cuboid container open in the direction of the forest floor.

3. Tiller (13) according to Claim 2, **characterized in that** the two runners (17) are made of steel and each run over the entire length of the two edges of the lower housing opening extending in the feed direction.

4. Tiller (13) according to Claim 3, **characterized in that** the runners (17) run beyond the ends of the edges of the lower housing opening extending in the feed direction to the adjacent surfaces of the housing shell (16) .

5. Tiller (13) according to one of Claims 1 to 4, **characterized in that** the runners (17) are attached to the ground guide housing (14) so as to be moveable in the direction of the longitudinal axis of the mounting bracket (02).

6. Tiller (13) according to one of Claims 1 to 5, **characterized in that** the discharge plate (18) is arranged on the rear side face of the housing shell (16) in the feed direction and is attached to the housing shell (16) in an axially displaceable manner in order to be able to set the clear width of the discharge opening (19).

7. Tiller (13) according to one of Claims 1 to 6, **characterized in that** the engine (11) driving the cutting chain (01) also indirectly drives the cross-cutting heads (03).

8. Tiller (13) according to one of Claims 1 to 7, **characterized in that** the engine is a hydraulic motor that can be powered by the excavator (11) or an electric motor.

9. Tiller (13) according to one of Claims 1 to 8, **characterized in that** the cutting tools (04) of the cutting chain (01) describe a semi-cylindrical surface at an exposed front end, which lies substantially in a common curved surface with front sections of the cylindrical cutting surfaces of the cross-cutting heads (03) .

10. Tiller (13) according to one of Claims 1 to 9, **characterized in that** the cutting chain (01) is driven by two drive sprockets (05), which are arranged between it and the cross-cutting heads (03) and engage both in driver elements (07) of the cutting chain (01) and in those of the respective adjacent cross-cutting head (03) .

11. Tiller (13) according to Claim 10, **characterized in that** the cutting chain (01) comprises drive pins (07), which are respectively located on its sides facing the cross-cutting heads (03) and form the driver elements of the cutting chain (01).

12. Tiller (13) according to either one of Claims 10 or 11, **characterized in that** the drive sprockets (05) are releasably connected to the cross-cutting heads (03) in such a way that the cross-cutting heads (03) can be removed from the mounting bracket (02) without impairing the drive of the cutting chain (01).

13. Tiller (13) according to one of Claims 1 to 12, **characterized in that** the engine and gear elements are arranged in a gear housing between the two cross-cutting heads (03), which is rotated by the cutting chain (01).

14. Tiller (13) according to Claim 1, **characterized in that** each of the two cross-cutting heads (03) is assigned its own engine (11), which both also drive the cutting chain (01).

15. Soil tilling machine (11) for preparing forest soils for tree planting, comprising an excavator (11) with a boom (12) as well as a tiller (13) according to one of Claims 1 to 14, which is releasably attached to the free end of the boom (12).

## Revendications

1. Fraise rotative (13) destinée à la préparation de sols forestiers pour la plantation d'arbres, comprenant :
• une fraise à monter sur une excavatrice avec
- une console de montage (02) pour la fixation sur un bras articulé mobile (12) d'une excavatrice (11),
- un moteur,
- deux têtes de coupe transversale (03) entraînées en rotation, qui sont placées des deux côtés de l'axe longitudinal de la console de montage (02) et portent de nombreuses dents de fraise (04), sachant que les dents de fraise (04) de chaque tête de coupe transversale (03) décrivent une surface d'enveloppe de fraisage cylindrique lors de la rotation de celle-ci,
- une chaîne de fraisage (01) rotative entraînée avec d'autres dents de fraise (04), dont la direction de marche passe parallèlement à l'axe longitudinal de la console de montage (02) et qui s'étend entre les deux têtes de coupe transversale (03), sachant qu'une ligne d'inversion avant de la chaîne de fraisage (01) se situe pour l'essentiel dans un plan tangent aux surfaces d'enveloppe de fraisage des deux têtes de coupe transversale (03),
**caractérisée par**
• un carter de guidage au sol (14), lequel enveloppe au moins en partie la console de montage (02) de la fraise à monter sur une excavatrice avec
- des points de fixation pour mise en lace sur la console de montage (02) et/ou sur le bras articulé (12),
- une plaque de couverture (15), laquelle ferme vers le haut le carter de guidage au sol (14),
- une enveloppe de carter (16) s'étendant vers le bas en partant de la plaque de couverture (15) pour l'essentiel parallèlement à l'axe longitudinal de la console de montage (02),
- une ouverture de carter inférieure opposée à la plaque de couverture (15), sachant que l'enveloppe de carter possède une extension axiale de telle manière que les deux têtes de coupe transversale (03) dépassent pour l'essentiel complètement et la section passant entre celles-ci de la chaîne de fraisage dépasse de l'ouverture de carter,
- deux patins de glissement (17), lesquels sont montés sur l'ouverture de carter en passant dans une direction d'avance et peuvent glisser sur le sol forestier,
- une plaque d'éjection (18), qui forme une section de l'enveloppe de carter (16) et libère une ouverture d'éjection (19) entre les patins de glissement (17).

2. Fraise rotative (13) selon la revendication 1, **caractérisée en ce que** le carter de guidage au sol (14) comporte une section pour l'essentiel rectangulaire et est dans la position de travail de la fraise rotative égale à un conteneur parallélépipédique ouvert en direction du sol forestier.

3. Fraise rotative (13) selon la revendication 2, **caractérisée en ce que** les patins de glissement (17) sont fabriqués en acier et progressent respectivement sur toute la longueur des deux bords s'étendant en direction d'avance de l'ouverture de carter inférieure.

4. Fraise rotative (13) selon la revendication 3, **caractérisée en ce que** les patins de glissement (17) progressent au-delà des extrémités des bords s'étendant dans la direction d'avance de l'ouverture de carter inférieure jusqu'aux surfaces limitrophes de l'enveloppe de carter (16).

5. Fraise rotative (13) selon l'une quelconque des revendications 1 à 4, **caractérisée en ce que** les patins de glissement (17) sont fixés sur le carter de guidage au sol (14), pouvant être déplacés en direction de l'axe longitudinal de la console de montage (02).

6. Fraise rotative (13) selon l'une quelconque des revendications 1 à 5, **caractérisée en ce que** la plaque d'éjection (18) est disposée sur la surface latérale arrière en direction d'avance de l'enveloppe de carter (16) et est montée pouvant être axialement déplacée sur l'enveloppe de carter (16) pour pouvoir régler la largeur intérieure de l'ouverture d'éjection (19).

7. Fraise rotative (13) selon l'une quelconque des revendications 1 à 6, **caractérisée en ce que** le moteur (11) entraînant la chaîne de fraisage (01) entraîne également indirectement les têtes de coupe transversale (03) .

8. Fraise rotative (13) selon l'une quelconque des revendications 1 à 7, **caractérisée en ce que** le moteur est un moteur hydraulique ou un moteur électrique pouvant être alimenté par l'excavatrice (11).

9. Fraise rotative (13) selon l'une quelconque des revendications 1 à 8, **caractérisée en ce que** les dents de fraisage (04) de la chaîne de fraisage (01) décrivent sur une extrémité avant dégagée une surface d'enveloppe semi-cylindrique, qui se situe pour l'essentiel dans une surface courbe commune avec des sections avant des surfaces d'enveloppe de fraise cylindriques des têtes de coupe transversale (03).

10. Fraise rotative (13) selon l'une quelconque des revendications 1 à 9, **caractérisée en ce que** l'entraînement de la chaîne de fraisage (01) a lieu par deux pignons entraîneurs (05), lesquels sont disposés entre celle-ci et les têtes de coupe transversale (03) et viennent en prise aussi bien dans les éléments d'entraîneurs (07) de la chaîne de fraisage (01) que dans ceux de la tête de coupe transversale respectivement limitrophe (03).

11. Fraise rotative (13) selon la revendication 10, **caractérisée en ce que** la chaîne de fraisage (01) comprend des axes d'entraînement (07), qui se trouvent respectivement sur leurs côtés tournés vers les têtes de coupe transversale (03) et forment les éléments entraîneurs de la chaîne de fraisage (01).

12. Fraise rotative (13) selon la revendication 10 ou 11, **caractérisée en ce que** les pignons entraîneurs (05) sont reliés de façon amovible aux têtes de coupe transversale (03) de telle sorte que les têtes de coupe transversale (03) peuvent être enlevées de la console de montage (02) sans avoir d'effet sur l'entraînement de la chaîne de fraisage (01).

13. Fraise rotative (13) selon l'une quelconque des revendications 1 à 12, **caractérisée en ce que** le moteur et les éléments de transmission sont disposés dans un carter de transmission entre les deux têtes de coupe transversale (03), lequel est contourné par la chaîne de fraisage (01).

14. Fraise rotative (13) selon la revendication 1, **caractérisée en ce qu'**un moteur propre (11) est attribué à chacune des deux têtes de coupe transversale (03), lesquels deux moteurs entraînent également la chaîne de fraisage (01).

15. Engin de travail du sol (11) destiné à la préparation des sols forestiers pour la plantation d'arbres, comprenant une excavatrice (11) avec un bras articulé (12) ainsi qu'une fraise rotative (13) selon l'une quelconque des revendications 1 à 14, qui est montée de façon amovible à l'extrémité libre du bras articulé (12) .
